(19)

Europäisches
Patentamt

European
Patent Office

Office européen
des brevets

(11) **EP 2 458 828 A1**

(12) **EUROPEAN PATENT APPLICATION**
published in accordance with Art. 153(4) EPC

(43) Date of publication:
    **30.05.2012 Bulletin 2012/22**

(51) Int Cl.:
    *H04M 1/02* (2006.01)      *H04M 1/03* (2006.01)
    *H04M 1/21* (2006.01)      *H04M 1/23* (2006.01)
    *H04R 1/28* (2006.01)      *H04R 1/02* (2006.01)

(21) Application number: **10802333.4**

(22) Date of filing: **15.07.2010**

(86) International application number:
    **PCT/JP2010/062396**

(87) International publication number:
    **WO 2011/010713 (27.01.2011 Gazette 2011/04)**

(84) Designated Contracting States:
    **AL AT BE BG CH CY CZ DE DK EE ES FI FR GB
    GR HR HU IE IS IT LI LT LU LV MC MK MT NL NO
    PL PT RO SE SI SK SM TR**

(30) Priority: **22.07.2009   JP 2009171465**

(71) Applicant: **NEC Corporation
    Tokyo 108-8001 (JP)**

(72) Inventor: **KURODA, Jun
    Tokyo 108-8001 (JP)**

(74) Representative: **Betten & Resch
    Theatinerstrasse 8
    80333 München (DE)**

(54) **ELECTRONIC DEVICE**

(57)     The objective of the present invention is to provide an electronic device in which sound quality of the sound radiated from a panel is changeable.

An electronic device of the present invention comprises: an electronic-device body which has a first sound hole that radiates a sound wave generated at a built-in vibration source; and a panel which has a second sound hole at the position corresponding to the first sound hole, and is attached to the electronic-device body: and the electronic-device body and the panel are separated from each other in a predetermined area including, the area where the first sound hole and the second sound hole are formed, and the cross section of the area where the first sound hole and the second sound hole overlap when the second sound hole is projected onto the first sound hole is smaller than the cross section of the first sound hole.

FIG.1

**Description**

**Technical Field**

The present invention relates to an electronic device provided with a vibration source.

**Background Art**

In recent years, a mobile terminal whose design is changeable by attaching a decorative panel to an outer surface of its case has been on the market.

A mobile terminal changeable in design is described, for example, in Patent Document 1. A mobile terminal described in Patent Document 1 comprises a key operation unit, a display unit, content specification information, a design panel information table, a storage unit and a control unit. The content specification information is information specifying, for each type of design panel (decorative panel), which content to use between the concealed content, which is readable only when a design panel is attached, and the user-setting content inputted by the user. The design panel information table is composed of a content table including the content of a standby screen or of a menu screen corresponding to a design panel. The storage unit stores content data of the concealed content or of the user-setting content. The control unit detects the type of an attached design panel, and on the basis of the detected design panel type, it refers to the design panel information table. It then reads out the content data specified by the content specification information and by the content table, and set the read-out data at the display unit and the like. According to this mobile terminal, a standby screen and a menu screen and the like can be changed to screens corresponding to the attached design panel.

Further, Patent Document 2, for example, discloses a telephone in which frequency characteristics of a receiver can be controlled and the sound quality can be changed.

**Citation List**

Patent Literature

Patent Document 1: Japanese Patent Application Laid-Open No. 2008-42824

Patent Document 2: Japanese Patent Application Laid-Open No. 1998-150698

**Disclosure of invention**

Technical Problem

In the mobile terminal described in Patent Document 1, it is not possible to change an image (sound quality) of a sound emitted from a speaker.

Further, in the telephone described in Patent Document 2, the number of parts for changing sound quality is so large that they give rise to complication of and an increase in size of the structure.

The present invention has been made in view of the above-mentioned situation, and is aimed at providing an electronic device in which sound quality of a sound radiated from a panel is changeable.

**Solution to Problem**

An electronic device in the present invention composes: an electronic-device body having a first sound hole which radiates a sound wave generated at a built-in vibration source; and a panel which has a second sound hole at a position corresponding to the first sound hole, and is fitted on the electronic-device body: wherein: the electronic-device body and the panel are separated from each other in a predetermined area including the area where the first and the second sound holes are formed; and the cross section of the area where the first and the second sound holes overlap, when the second sound hole is projected onto the first sound hole, is smaller than the cross section of the first sound hole.

Advantageous Effects of Invention

According to the present invention, it is possible to change sound quality of a sound radiated from a panel of an electronic device.

## BRIEF DESCRIPTION OF THE DRAWINGS

[Fig. 1] (a) a diagram showing an example of an electronic device according to the first exemplary embodiment of the present invention. (b) a cross-sectional diagram of (a) taken on line A-A'.

[Fig. 2] (a) a diagram showing a positional relationship between body sound holes and panel sound holes. (b) a diagram showing another positional relationship between body sound holes and panel sound holes.

[Fig. 3] a diagram showing an example of another structure of the electronic device according to the first exemplary embodiment of the present invention.

[Fig. 4] (a) a diagram showing an example of an electronic device according to the second exemplary embodiment of the present invention. (b) a cross-sectional diagram of (a) taken on line B-B'.

[Fig. 5] a diagram showing an acoustic equivalent circuit of the electronic device according to the second embodiment of the present invention.

[Fig. 6] a diagram showing paths where resonances occur.

[Fig. 7] a diagram showing a relation between a frequency and a sound pressure.

[Fig. 8] a diagram showing an example of an electronic device according to the third exemplary embodiment of the present invention.

[Fig. 9] a diagram showing an example of an electronic device according to the fourth exemplary embodiment of the present invention.

[Fig. 10] (a) a diagram showing an example of an electronic device according to the fifth exemplary embodiment of the present invention. (b) a cross-sectional diagram of (a) taken on line C-C'.

[Fig. 11] a diagram showing an acoustic equivalent circuit of the electronic device according to the fifth embodiment of the present invention.

[Fig. 12] (a) a diagram showing an example of a mobile terminal relating to the present invention. (b) a cross-sectional diagram of (a) taken on line D-D'.

[Fig. 13] (a) a diagram showing a positional relationship between body sound holes and panel sound holes, in a mobile terminal relating to the present invention. (b) a diagram showing another positional relationship between body sound holes and panel sound holes.

## Description of Embodiments

The exemplary embodiments of the present invention will be described with reference to the drawings. However, the embodiments shall not limit the technical scope of the present invention.

[The first exemplary embodiment]

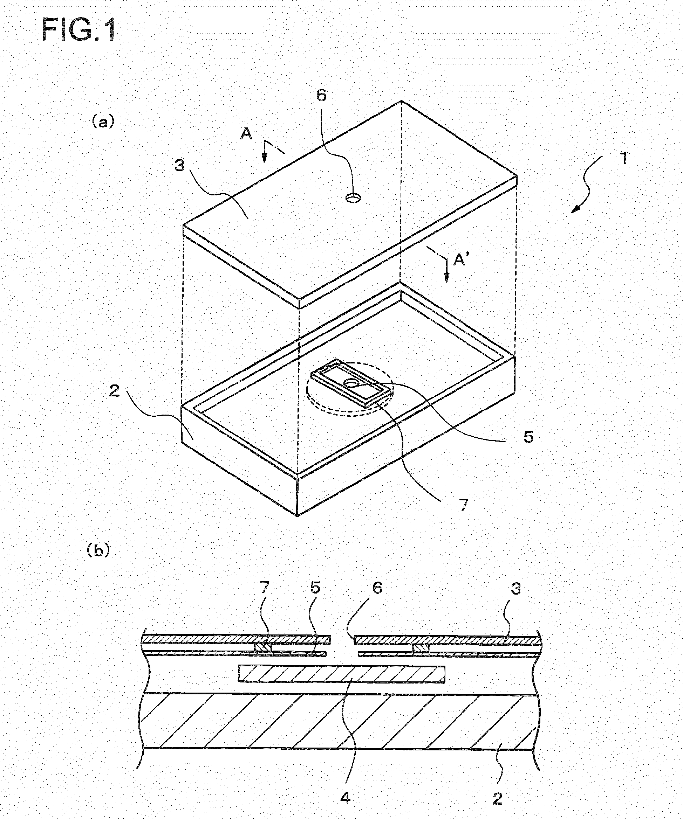

Description will be given below of an electronic device of the first exemplary embodiment of the present invention, based on Fig. 1.

An electronic device 1 of the present exemplary embodiment comprises an electronic-device body 2 and a panel 3. Fig. 1 (a) shows a state prior to the attachment of the panel 3 to the electronic-device body 2. Fig. 1 (b) shows a cross-sectional view taken on line A-A' of the electronic device 1 in the state where the panel 3 is attached to the electronic-device body 2.

As shown in Fig. 1, (a) and (b), the electronic-device body 2 is provided with a first sound hole 5 which radiates a sound wave generated at a built-in vibration source 4, and a convex portion 7. The panel 3 is provided with a second sound hole 6 at a position corresponding to the first sound hole 5. Because of the existence of the convex portion 7, the electronic-device body 2 and the panel 3 are separated from each other in a predetermined area including the area where the first sound hole 5 and the second sound hole 6 are formed. Further, when the second sound hole 6 is projected onto the first sound hole 5, the cross section of the area where the first sound hole 5 and the second sound hole 6 overlap is smaller than the cross section of the first sound hole 5.

Here, the "cross section of a hole" described in the present exemplary embodiment means a square measure of an opening portion which is a starting or an ending point of the hole. Further, the cross section of the area where the first sound hole 5 and the second sound hole 6 overlap means the square measure of the area where the opening portion of the first sound hole 5 and that of the second sound hole 6 overlap.

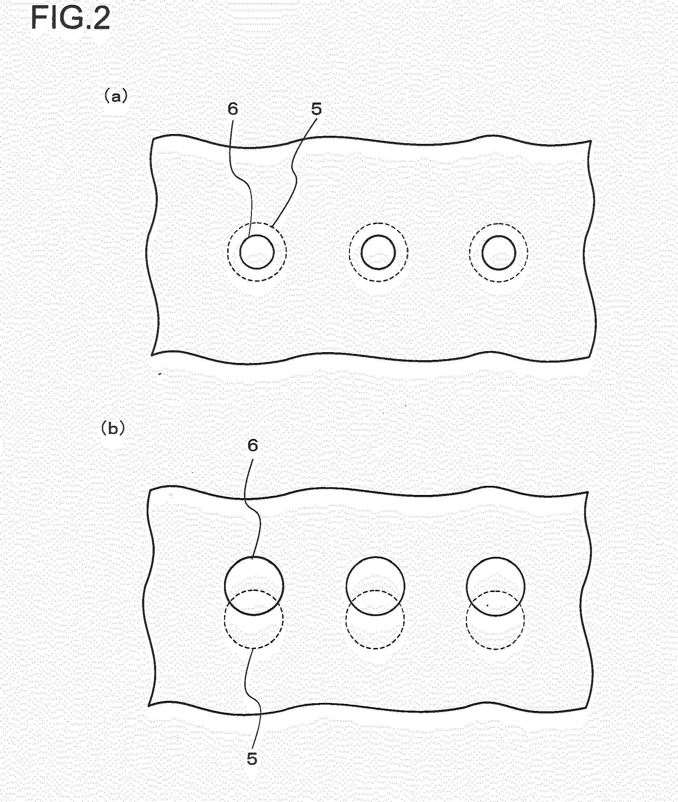

In Fig. 2, shown are statuses of the second holes 6 observed from above the panel 3, in the state where the panel 3 is attached to the electronic-device body 2. The configuration may be such that, as shown in Fig. 2 (a), the first sound hole 5 and the second sound hole 6 completely overlap when observed from above the panel 3. In this case, the cross section of the first sound hole 5 is larger than that of the second sound hole 6. Alternatively, as shown in Fig. 2 (b), the configuration may be such that the first sound hole 5 and the second sound hole 6 overlap partly. In this case, the cross section of the first sound hole 5 may be larger or smaller than the cross section of the second sound hole 6.

Next, functions and effects of the present exemplary embodiment will be described.

In the electronic device 1 of the present exemplary embodiment, the electronic-device body 2 and the panel 3 are separated from each other in the areas of the first sound hole 5 and of the second sound hole 6 and in the area around them. Accordingly, it is possible to add an acoustic compliance element by adjusting the volume of a space between the electronic-device body 2 and the panel 3. When the second sound hole 6 is projected onto the first sound hole 5, the cross section of the area where the first sound hole 5 and the second sound hole 6 overlap is smaller than the cross section of the first sound hole 5. Accordingly, it is possible to add an acoustic inertance by adjusting the cross section and position of the second sound hole 6. Then, through the added acoustic compliance element and acoustic inertance, acoustic characteristics of the sound of the vibration source 4 radiated from the second sound hole 6 can be changed. As a result, variation in the sound quality can be realized.

A has been described above, in the electronic device 1 of the present exemplary embodiment, by adjusting the cross section, position and length of the second sound hole 6, acoustic characteristics of the sound of the vibration source 4 radiated from the second sound hole 6 can be adjusted. That is, in the electronic device 1 of the present exemplary embodiment, acoustic characteristics of the sound radiated from the panel 3 can be adjusted. Accordingly, sound quality of the sound generated from the electronic device 1 becomes changeable.

Although the electronic device 1 of the exemplary embodiment has been assumed to have a configuration provided with only one first sound hole 5 and one second sound hole 6, the configuration is not limited to this. That is, also possible is a configuration where a plurality of first sound holes 5 and of second sound holes 6 are provided.

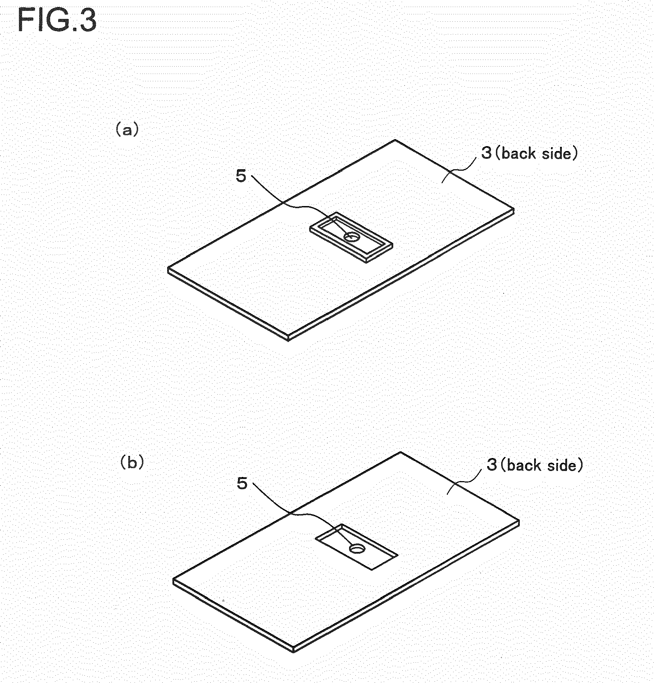

Further, although the electronic-device body 2 has been assumed to be provided with a convex portion 7, it is not the only configuration. For example, as shown in Fig. 3 (a), a convex portion may be provided on the side of the panel 3. Alternatively, the configuration may be such that, as shown in Fig. 3 (b), the panel 3 wholly has a larger thickness, and only the area around the second hole 6 is depressed. Fig. 3, (a) and (b), each is a diagram showing the panel 3 observed from the back side (the side facing the electronic-device body 2). However, possible are any configurations, not limited to the above-described configurations, in which the electronic-device body 2 and the panel 3 are separated from each other in a predetermined area including the area where the first sound hole 5 and the second sound hole 6 are formed.

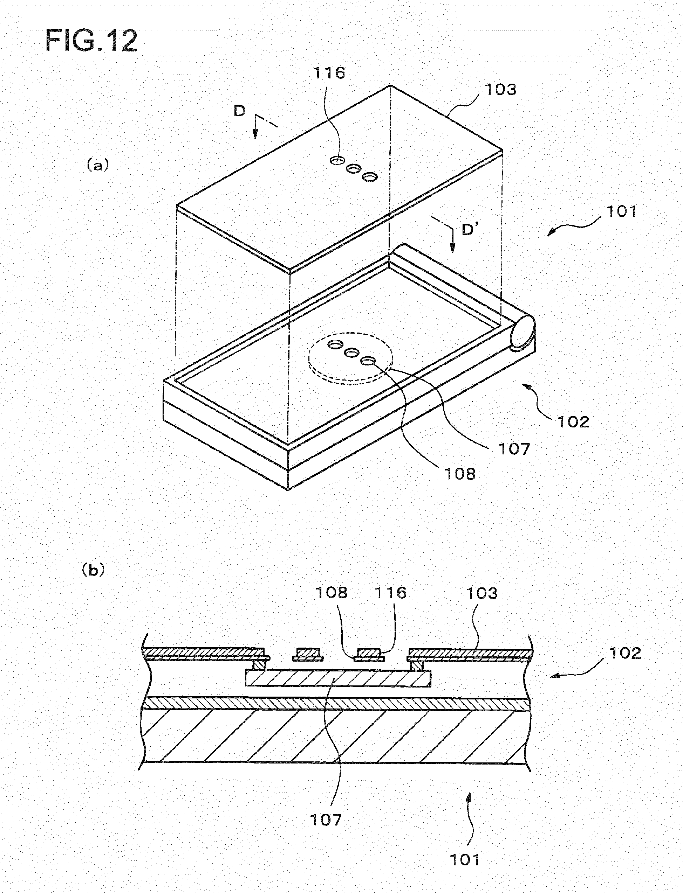

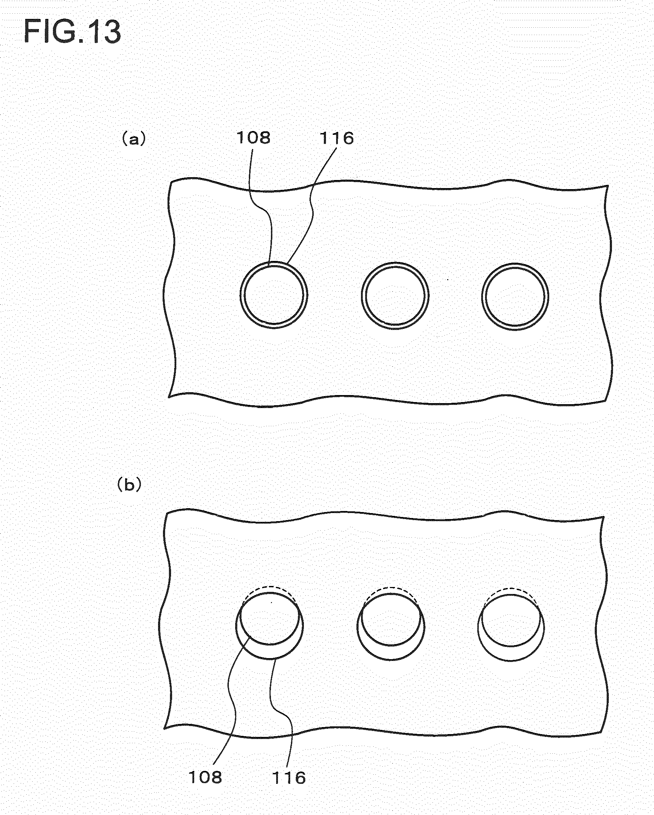

In many cases, an electronic device has generally been designed in such a way that a sound radiated from a body sound hole be changed as less as possible. Further, there has been a concern that an adverse effect in terms of acoustics arises from the creation of a gap between a body sound hole and a panel sound hole. Accordingly, in general, like a mobile terminal 101 shown in Figs. 12 and 13, a decorative panel 103 has often been designed to be intimately attached to a mobile-terminal body 102. Here, as shown in Fig. 12, (a) and (b), the mobile terminal body 102 is provided with a built-in speaker 107. Further, as shown in Fig. 13 (a), it has been general that a panel sound hole 116 is formed to be larger than a body sound hole 108. Alternatively, as shown in Fig. 13 (b), a design has been made in such a way that the portion of the body sound hole 108 covered by the decorative panel 103 be as small as possible.

However, in the electronic device 1 of the present exemplary embodiment, by adopting the above-described configuration which is different from those shown in Figs. 12 and 13, it has become possible to change the sound quality of a sound generated from an electronic device to desired sound quality.

[The second exemplary embodiment]

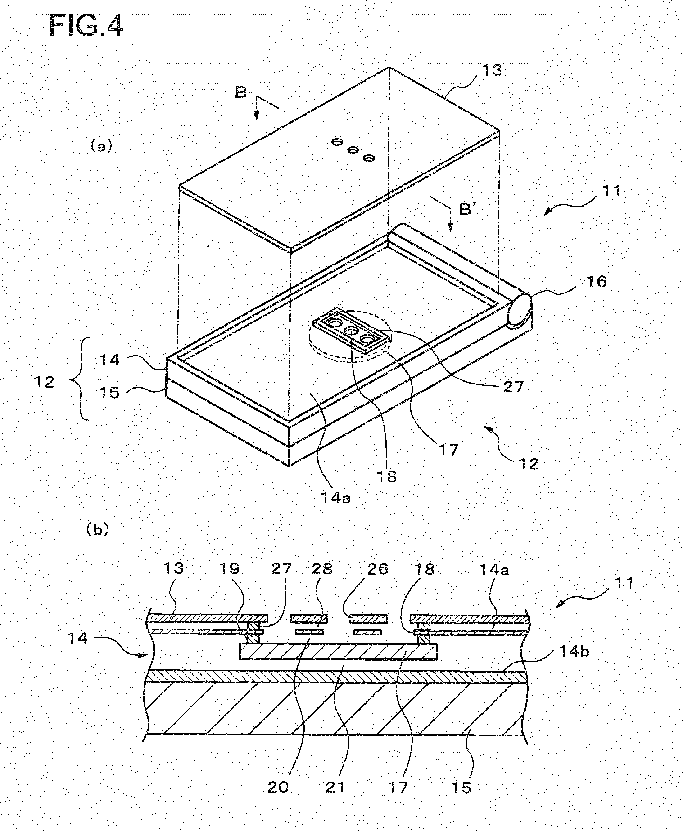

An electronic device of the second exemplary embodiment of the present invention will be described below, using Figs. 4 to 7. As shown in Fig. 4, a mobile terminal 11, which is an electronic device of the present exemplary embodiment, comprises an electronic-device body 12 and a decorative panel (panel) 13.

The mobile terminal body 12 comprises a display-side body 14 and a key-side body 15 having operation keys. The display-side body 14 and the key-side body 15 can be folded via a hinge portion 16. A speaker 17 as a vibration source is embedded in the display-side body 14. Body sound holes 18 are provided in a cover 14a which is disposed on the surface of the back side (the side where a display is not present) of the display-side body 14. These body sound holes 18 are provided at the positions to overlap the speaker 17, and radiate a sound generated by the speaker 17.

As shown in Fig. 4 (b), inside the display-side body 14, a first cushion member 19, which intimately contacts the speaker 17 and the cover 14a, is disposed to enclose the body sound holes 18. By this first cushion member 19, the speaker 17 and the cover 14a are separated from each other, and a space between the speaker 17 and the cover 14a constitutes a first air chamber 20.

The first cushion member 19 is formed out of airtight material such as rubber, and also plays the role of a spacer to separate the speaker 17 and the cover 14a by a predetermined gap.

Of the speaker 17, the surface reverse to the surface provided with the first cushion member 19 faces the back side of the display 14b. The speaker 17 and the display 14b are separated from each other, and a space 21 is formed between the speaker 17 and the display 14b.

The decorative panel 13 is a detachable panel to be attached to the back side of the display-side body 14. By changing this decorative panel 13, design of the mobile terminal 11 can be varied.

In the decorative panel 13, panel sound holes 26 are formed at positions corresponding to the body sound holes 18 in the state where the decorative panel 13 is attached to the mobile-terminal body 12.

As shown in Fig. 4 (b), the decorative panel 13 is separated from the cover 14a of the display-side body 14. In the present exemplary embodiment, a concave portion is formed on the back side of the display-side body 14. Attached above the concave portion, the decorative panel 13 is separated from the cover 14a of the display-side body.

A second cushion member 27 intimately contacting the decorative panel 13 and the cover 14a is disposed to enclose the body sound holes 18 and the panel sound holes 26. A space separated by this second cushion member 27 constitutes a second air chamber 28. That is, the second cushion member 27 plays the role of a partition member of the gap between the body sound holes 18 and the panel sound holes 26.

The second cushion member 27 is formed out of airtight material such as rubber, and also plays the role of a spacer to separate the decorative panel 13 and the cover 14a by a predetermined gap.

The positional relationship between the body sound holes 18 and the panel sound holes 26 is the same as that in the first exemplary embodiment. That is, as shown in Fig. 2 (a), the panel sound holes 26 are formed to have a cross section smaller than that of the body sound holes 18. The panel sound holes 26 completely overlap the body sound holes 18. As shown in Fig. 2 (b), the body sound holes 18 may partly overlap the panel sound holes 26. In this case, the panel sound holes 26 may be formed to have a cross section equal to or larger than that of the body sound holes 18.

Further, the decorative panel 13 and the display-side body 14 are provided with locking members (not shown in the figures) such as a latch part and its reception part. Accordingly, the decorative panel 13 is fitted at a predetermined position on the display-side body 14. Here, the decorative panel 13 may be fitted on the display-side body 14 with adhesive, screws and the like, not with the locking members.

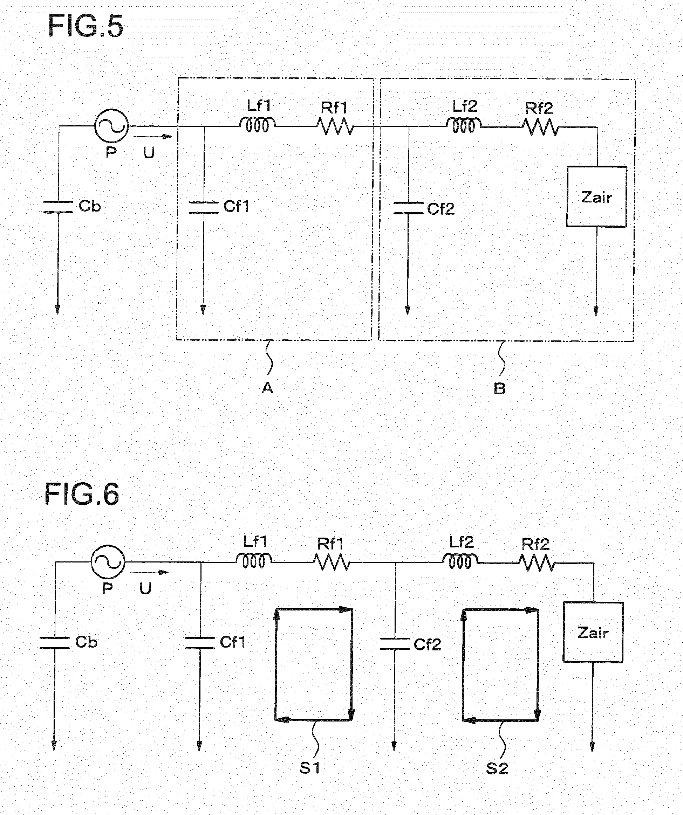

Next, adjustment of acoustic characteristics of the mobile terminal 11 will be described, using an acoustic equivalent circuit diagram shown in Fig. 5.

As shown in Fig. 5, in the acoustic equivalent circuit, sound pressure of the speaker 17 is represented by a voltage source P. Acoustic compliances of the first and the second air chambers 20 and 28, respectively, and of the space 21 at the rear side of the speaker 17 are assumed to be expressed by capacitances. Further, acoustic inertances inside the body sound holes 18 and inside the panel sound holes 26 are assumed to be expressed by inductances.

Adjustment of acoustic characteristics of the mobile terminal 11 according to the present exemplary embodiment is performed by adjusting the shapes of the panel sound holes 26 in the decorative panel 13 and of the second air chamber 28. The shapes of the first air chamber 20 in the mobile-terminal body 12, of the space 21 at the rear side of the speaker 17, and of the body sound holes 18 are kept unchanged.

When the volume of the first air chamber 20 is represented by V1, acoustic compliance Cf1 of the first air chamber 20 is expressed by equation (1).

$$C_{f1} = V_1 / \rho\, c^2 \dots (1)$$

where $\rho$ represents the mass density of the air, and c the sound velocity.

When the volume of the second air chamber 28 is represented by $V_2$, acoustic compliance $C_{f2}$ of the second air chamber 28 is expressed by equation (2).

$$C_{f2} = V_2 / \rho\, c^2 \dots (2)$$

Further, when the volume of the space 21 at the rear side of the speaker 17 is represented by $V_b$, acoustic compliance $C_b$ of the space 21 at the rear side of the speaker 17 is expressed by equation (3).

$$C_{fb} = V_b / \rho\, c^2 \dots (3)$$

As can be seen from equations (1), (2) and (3) described above, by adjusting the volumes of the first and the second air chambers 20 and 28, and of the space 21 at the rear side of the speaker 17, acoustic compliances $C_{f1}$, $C_{f2}$ and Cb can be adjusted, respectively.

In the present exemplary embodiment, acoustic compliance $C_{f2}$ is adjusted by adjusting the volume $V_2$ of the second air chamber 28. The adjustment of the volume of the second air chamber 28 is performed by changing the position for disposing and height of the second cushion member 27.

When the cross section and the length of the body sound holes 18 are represented by $S_1$ and $l_1$, respectively, acoustic inertance Lf1 of the body sound holes 18 is expressed by equation (4).

$$L_{f1} = \textbf{p}\, l_1/S_1 \dots (4)$$

where, $\square$ represents the mass density of the air.

When $S_2$ represents the cross section of the area where the panel sound holes 26 and the body sound holes 18 overlap when the panel sound holes 26 are projected onto the body sound holes 18, and $l_2$ represents the length of the panel sound holes 26, acoustic inertance of the panel sound holes 26 is expressed by equation (5).

$$L_{f2} = \textbf{p}\, l_2/S_2 \dots (5)$$

As can be seen from equations (4) and (5), by adjusting the cross section and length of the body sound holes 18 and the cross section, positions and length (the thickness of the decorative panel 13) of the panel sound holes 26, acoustic inertances $L_{f1}$ and $L_{f2}$ can be adjusted, respectively.

In the present exemplary embodiment, acoustic inertance $L_{f2}$ is adjusted by adjusting the cross section, positions and length of the panel sound holes 26.

Further, it is assumed that, in the acoustic equivalent circuit shown in Fig. 5, $R_{f1}$, $R_{f2}$ and $Z_{air}$ represent acoustic resistance of the body sound holes 18, that of the panel sound holes 26 and radiation impedance of the decorative panel 13, respectively.

Radiation impedance $Z_{air}$ is expressed by equation (6).

$$Z_{air} = \pi r^2 \rho c \left[ 1 - \frac{J(2kr)}{kr} \right] / N + j \frac{\pi \rho c}{2k^2} K(2kr)/N \dots (6)$$

where, r represents the radius of each of the panel sound holes 26, k the wave number, J a Bessel function, K a Struve function, j the imaginary unit, and N the number of panel sound holes 26.

As can be seen from equation (6), radiation impedance $Z_{air}$ can be adjusted by adjusting the radius and number of the panel sound holes 26. Sound pressure of a sound emitted from the speaker 17 is determined by the electric current flowing through radiation impedance $Z_{air}$ (volume velocity) and the voltage (sound pressure). Accordingly, sound pressure of the speaker 17 can be adjusted by adjusting the radius and number of the panel sound holes 26.

Area A indicated by a dashed-dotted line in Fig.5 includes a set of acoustic elements composed of the body sound holes 18 and the first air chamber 20. Area B includes a set of acoustic elements corresponding to the panel sound holes 26 and the second air chamber 28. In the present exemplary embodiment, the adjustment is performed on the acoustic elements in area B.

Next, description will be given of acoustic resonances occurring at the acoustic radiation surface of the speaker 17, using the drawings.

Resonance S1 in Fig. 6 represents the resonance occurring between the mobile-terminal body 12 and decorative panel 13 shown in Fig. 4. Resonance S2 in Fig. 6 represents the resonance occurring between the decorative panel 13 and the radiation impedance, that is, the air outside the panel sound holes 26.

When resonance S1 becomes strong, it becomes difficult for electric current to flow through radiation impedance $Z_{air}$ of the decorative panel 13 at the resonance frequency. Accordingly, a cut of a sound pressure radiated finally from the decorative panel 13 can be performed.

By generating resonance S2, it is possible to create a peak at a desired frequency. Thereby, a boost of sound pressure can be performed.

Then, a cut of sound pressure is performed at a predetermined frequency band, and a boost of sound pressure is performed by creating a peak at another predetermined frequency. By this way, acoustic characteristics of a sound radiated from the panel sound holes 26 are adjusted.

Next, presented are results of the experiments where acoustic characteristics of the mobile terminal 11 were adjusted, and then the acoustic characteristics were confirmed by measurements. In the measurements of the acoustic characteristics, sound pressures were measured with a microphone at the position 10cm away along the axis of the sound hole of each mobile terminal.

First, acoustic characteristics of the mobile terminal 101 relating to the present invention were measured.

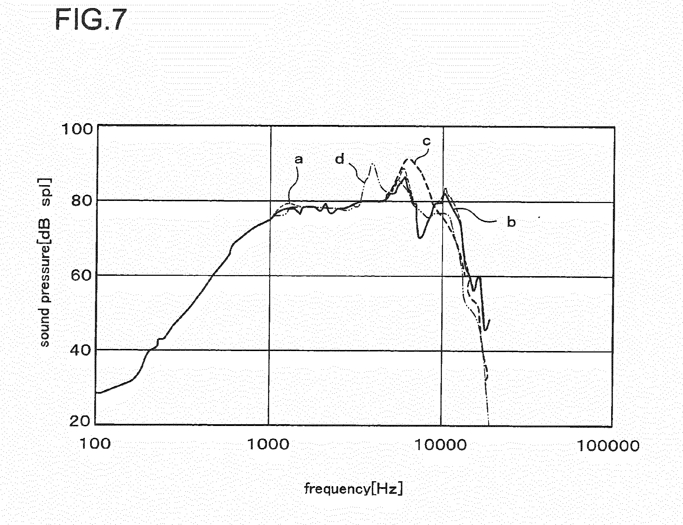

Line a shown in Fig. 7 indicates a relation between a frequency and a sound pressure of a mobile terminal with no decorative panel attached. Line b shown in Fig. 7 indicates a relation between a frequency and a sound pressure of the mobile terminal 101, shown in Fig. 12, with the decorative panel 103 attached.

Comparing line a with line b in Fig. 7, it is recognized that the acoustic characteristics of the mobile terminal 101 with the decorative panel 103 attached are little different from the acoustic characteristics of the mobile terminal with no decorative panel attached.

Next, acoustic characteristics were measured of the mobile terminal which was adjusted using the decorative panel 13 according to the present exemplary embodiment.

Line c in Fig. 7 indicates a relation between a sound pressure and a frequency of the mobile terminal 11 which is with the decorative panel 13 attached and with a sound pressure peak thus formed at around 6 kHz . By forming a sound pressure peak at around 6 kHz, clearness of sound can be increased.

Line d in Fig. 7 indicates a relation between a sound pressure of the mobile terminal 11 with the decorative panel 13 attached, whose acoustic characteristics were adjusted such that a sound pressure peak was formed at around 4 kHz, and further a sound pressure peak at around 6 kHz and high-pitched sounds at 6 kHz or higher frequencies were cut. By forming a sound pressure peak at around 4 kHz, and further cutting a sound pressure peak at around 6 kHz and high-pitched sounds at 6 kHz or higher frequencies, it is possible to give a feeling of voluminous sound to a human ear.

In this case, a design of the decorative panel 13 may be matched with the image of the adjusted sound. For example, the decorative panel 13 having the characteristics with increased clearness of sound, such as line c in Fig. 7, may have a design fitting the wordings such as "crisp", "vivid and clear" and "sharp" corresponding to the image of the sound.

Further, for example, the decorative panel 13 having the characteristics giving a feeling of voluminous sound to a human ear, such as line d in Fig. 7, may have a design fitting the wordings such as "loud", "punchy", "large volume" and "aggressive" corresponding to the image of the sound.

The above-mentioned images of sound are just examples, and they can be arbitrarily determined. Further, a design of the decorative panel 13 need not be matched with the image of its sound.

Next, functions of the mobile terminal 11 of the present exemplary embodiment will be described below, using the drawings.

In the mobile terminal 11 of the present exemplary embodiment, the decorative panel 13 is provided with the panel sound holes 26, and the second air chamber 28 is provided between the decorative panel 13 and the mobile-terminal body 12. Then, by adjusting the volume of the second air chamber 28, acoustic compliance $C_{f2}$ is adjusted. By adjusting the cross section, positions and length of the panel sound holes 26, acoustic inertance $L_{f2}$ is adjusted. By adjusting the radius and number of the panel sound holes 26, and thereby adjusting radiation impedance $Z_{air}$, acoustic characteristics of the sound of the speaker radiated from the panel sound holes 26 can be adjusted.

Resonance S1 occurs between the mobile-terminal body 12 and the decorative panel 13, and resonance S2 occurs between the decorative panel 13 and the air outside the panel sound holes 26. Accordingly, a cut of a sound pressure at a predetermined frequency band can be performed, and creation of a peak at another predetermined frequency also can be performed. Since a boost of a sound pressure is thus possible, acoustic characteristics of the sound radiated from the panel sound holes 26 are adjustable.

As above, according to the mobile terminal 11 of the present exemplary embodiment, acoustic characteristics of the sound radiated from the panel sound holes 26 are adjustable. Therefore, sound quality of the sound radiated from the panel sound holes 26 is changeable.

In electronic devices such as a mobile terminal equipped with a vibrator, a chattering sound may be generated when the vibrator vibrates. This chattering sound can be suppressed only by adjusting the vibrator body or the speaker body, which has caused a problem in that the repairing by a specialist is necessary actually. However, according to the mobile terminal 11 of the present exemplary embodiment, this problem can be settled. That is, in the case a vibrator is provided in the mobile terminal 11, even when a chattering sound is generated when the vibrator vibrates, by adjusting the cross section and the like of the panel sound holes 26 of the decorative panel 13, acoustic characteristics of the radiated sound can be set at the characteristics which can cancel out the chattering sound.

In the present exemplary embodiment, the assumed configuration has been such that the display-side body 14 is provided with the built-in speaker 17 and the body sound holes 18, but the configuration is not limited to this. That is, also possible is a configuration where the key-side body 15 is provided with the built-in speaker 17 and the body sound holes 18. Then, the configuration may be such that the decorative panel 13 is attached to the key-side body 15.

[The third exemplary embodiment]

Next, the third exemplary embodiment of the present invention will be described below. Here, with respect to the members and portions which are identical with or similar to that in the second exemplary embodiment, the identical codes are given to them without giving description.

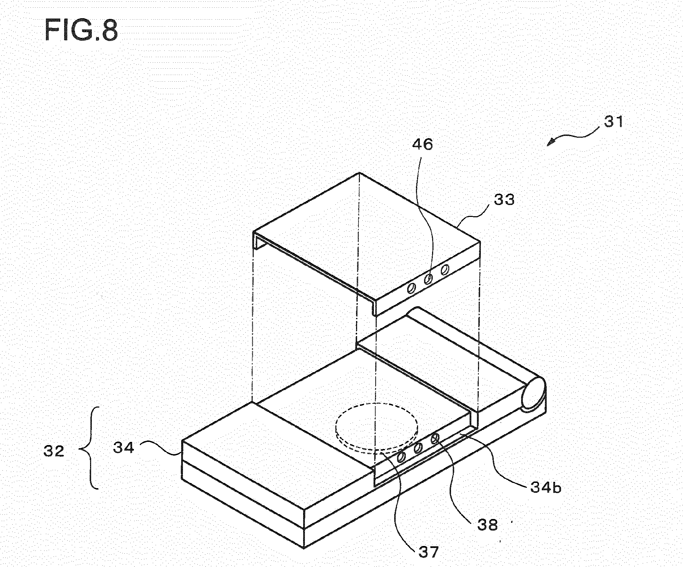

As shown in Fig. 8, in a mobile terminal 31 of the present exemplary embodiment, a concave portion 34b is formed on a side surface of a display-side body 34 which is provided with a speaker 37 inside. Body sound holes 38 are provided at the concave portion 34b. A decorative panel 33 is a panel covering a part of the back side of and a part of the side surfaces of the display-side body 34, and is provided with panel sound holes 46 at the positions corresponding to the body sound holes 38.

The decorative panel 33 is attached to a side surface of the display-side body 34 in a manner it covers the concave portion 34b, and accordingly a space between this concave portion 34b and the decorative panel 33 becomes a second air chamber 48.

Thus configured, the mobile terminal 31 according to the present exemplary embodiment can bring about Similar effect as the second exemplary embodiment.

The decorative panel 33 may be a panel covering whole the outer side surfaces and whole the side surfaces of the display-side body 34, or may be a panel covering only a side surface.

As in the second exemplary embodiment, a cushion member may be provided between the display-side body 34 and the decorative panel 33 to partition the space.

The body sound holes 38 may be provided at the surface of the display-side body 34 where a display is present. The decorative panel 33 may be a panel covering the body sound holes 38 and the display, or may be a panel covering only the body sound holes 38.

[The fourth exemplary embodiment]

Next, a mobile terminal according to the fourth exemplary embodiment of the present invention will be described below.

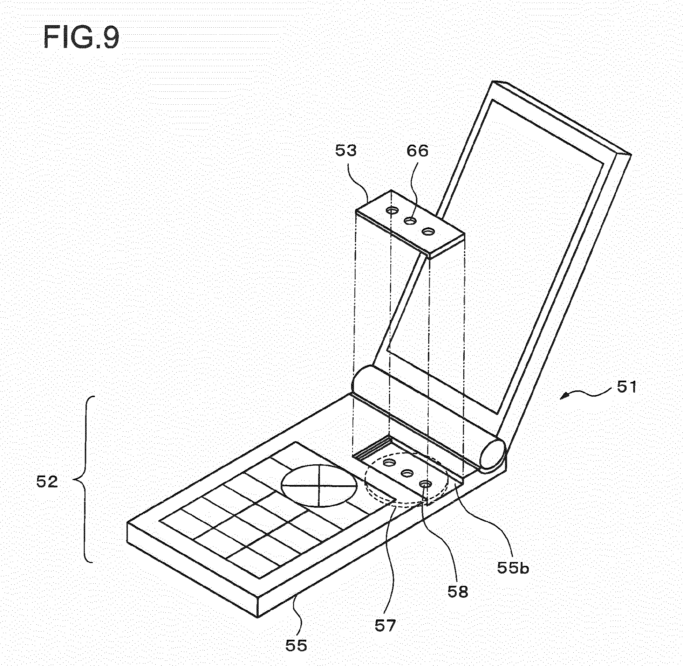

As shown in Fig. 9, in a mobile terminal 51 of the present exemplary embodiment, a concave portion 55b is formed at the surface where operation keys are disposed, of a key-side body 55 which is provided with a speaker 57 inside. The concave portion 55b is provided with body sound holes 58. A decorative panel 53 is a panel to be fitted above this concave portion 55b, and is provided with panel sound holes 66.

A space between the concave portion 55b and the decorative panel 53 becomes a second air chamber 68.

The mobile terminal 51 according to the present exemplary embodiment displays similar effect as the second exemplary embodiment.

The positions for providing the body sound holes 58 need not be at the back side of the key-side body 55. That is, the body sound holes 58 may be provided on the side where the keys are disposed or at the side surface, of the key-side body 55.

[The fifth exemplary embodiment]

Next, a mobile terminal according to the fifth exemplary embodiment of the present invention will be described below.

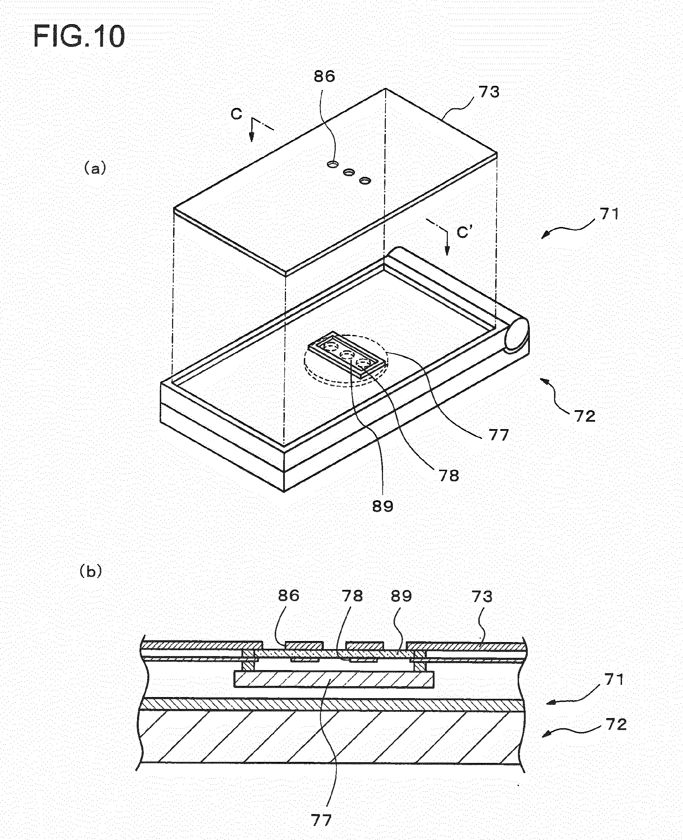

As shown in Fig. 10, (a) and (b), in a mobile terminal 71 of the present exemplary embodiment, a sound absorbing member 89 is disposed between a mobile-terminal body 72, which is provided with a speaker 77 inside, and a decorative panel 73. The sound absorbing member 89 is in contact with body sound holes 78 and panel sound holes 86.

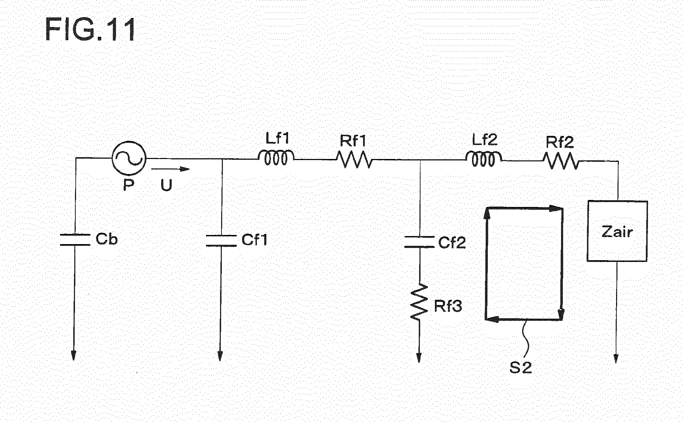

As shown in Fig. 11, in the acoustic equivalent circuit of the mobile terminal 71, acoustic resistance $R_{f3}$ corresponding to the sound absorbing member 89 is added in the path between acoustic capacitance $C_{f2}$ and the ground. By using this acoustic resistance $R_{f3}$ as a damping element, it is possible to decrease the Q value of resonance S2, and thus to lower the peak value of a peak of sound pressure and broaden the peak width. By this way, it is possible to adjust acoustic characteristics of the sound radiated from the panel sound holes 86, and thereby to change its sound quality.

It is also possible to adjust the acoustic characteristics by disposing an acoustic resistive material and the like selected from among foamed plastics, felt and the like, in place of the sound absorbing member 89.

In each exemplary embodiment described above, a decorative panel is attached to the mobile-terminal body provided with a speaker, but the configuration is not limited to it. That is, a decorative panel may be attached to an electronic device other than a mobile terminal, or to an electronic device which is provided with a vibration source such as a vibrator, in place of a speaker.

Further, a panel employed in each exemplary embodiment described above may be a decorative panel distinctive in design, or may be a panel which is not aimed at changing a design but is aimed at only adjusting the sound quality.

Description has been given above of the exemplary embodiments of the mobile terminal according to the present invention, but the present invention is not limited to the above-described exemplary embodiments. Various changes and modifications which are understood by those skilled in the art may be made in the configurations and details of the present invention, within the scope of the present invention.

This application insists on priority based on Japanese Patent Application No. 2009-171465 proposed on July 22nd, 2009 and takes everything of the disclosure here.

**Industrial Applicability**

An electronic device according to the present invention is applicable to an electronic device provided with a vibration source such as a speaker, for example, a cellular phone.

**Reference Signs List**

| | |
|---|---|
| 1 | electronic device |
| 2 | electronic-device body |
| 3 | panel |
| 4 | vibration source |
| 5 | first sound hole |
| 6 | second sound hole |
| 7 | convex portion |
| 11, 31, 51, 71, 101 | mobile terminal |
| 12, 32, 52, 72, 102 | mobile-terminal body |
| 13, 33, 53, 73, 103 | decorative panel |
| 14, 34 | display-side body |
| 14a | cover |
| 14b | display |
| 15, 55 | key-side body |
| 16 | hinge portion |
| 17,37,57,77,107 | speaker |
| 18, 38, 58, 78, 108 | body sound hole |
| 19 | first cushion member |
| 20 | first air chamber |
| 21 | space |
| 26, 46, 66, 86, 116 | panel sound hole |
| 27 | second cushion member |
| 28, 48, 68 | second air chamber |
| 34b, 55b | concave portion |
| 89 | sound absorbing member |

**Claims**

1. An electronic device comprising:

    an electronic-device body which has a first sound hole that radiates a sound wave generated at a built-in vibration source; and
    a panel which has a second sound hole at the position corresponding to said first sound hole, and is attached to said electronic-device body: wherein:
    said electronic-device body and said panel are separated from each other in a predetermined area including the area where said first sound hole and said second sound hole are formed, and
    the cross section of the area where said first sound hole and said second sound hole overlap when said second sound hole is projected onto said first sound hole is smaller than the cross section of said first sound hole.

2. The electronic device according to claim 1, wherein
    the cross section of said second sound hole is smaller than the cross section of said first sound hole.

3. The electronic device according to claims 1 or 2, wherein,
   between said electronic-device body and said panel, a partition portion which partitions the gap between said electronic-device body and said panel is formed.

4. The electronic device according to any one of claims 1 to 3, wherein,
   between said electronic-device body and said panel, an air chamber which is linked with said first and second sound holes and has a predetermined volume is formed.

5. The electronic device according to any one of claims 1 to 3, wherein
   a sound absorbing member is disposed between said electronic-device body and said panel, in said predetermined area.

# FIG.1

(a)

(b)

# FIG.2

(a)

(b)

# FIG.3

(a)

5

3(back side)

(b)

5

3(back side)

# FIG.4

(a)

B

B'

11

13

16

12 { 14
     15

27

17

12

18

14a

(b)

13   19   27   28   26   18   14a

11

14

14b

20   21   17   15

# FIG.5

# FIG.6

## FIG.7

# FIG.8

# FIG.9

# FIG.10

(a)

(b)

# FIG.11

# FIG.12

(a)

(b)

# FIG.13

(a)

108    116

(b)

108    116

## INTERNATIONAL SEARCH REPORT

| International application No. |
| --- |
| PCT/JP2010/062396 |

**A. CLASSIFICATION OF SUBJECT MATTER**
*H04M1/02*(2006.01)i, *H04M1/03*(2006.01)i, *H04M1/21*(2006.01)i, *H04M1/23* (2006.01)i, *H04R1/28*(2006.01)i, *H04R1/02*(2006.01)n

According to International Patent Classification (IPC) or to both national classification and IPC

**B. FIELDS SEARCHED**

Minimum documentation searched (classification system followed by classification symbols)
H04M1/02, H04M1/03, H04M1/21, H04M1/23, H04R1/28, H04R1/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-285428 A (Kyocera Corp.), 12 October 2001 (12.10.2001), paragraphs [0015], [0017], [0018]; fig. 1 to 3 (Family: none) | 1-5 |
| Y | JP 2008-042824 A (NEC Saitama, Ltd.), 21 February 2008 (21.02.2008), paragraph [0018]; fig. 1 (Family: none) | 1-5 |
| Y | JP 2009-049964 A (Panasonic Electric Works Co., Ltd.), 05 March 2009 (05.03.2009), paragraphs [0003], [0084] (Family: none) | 5 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 23 August, 2010 (23.08.10) | 31 August, 2010 (31.08.10) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
|---|
| PCT/JP2010/062396 |

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 029579/1990(Laid-open No. 130196/1990)<br>(Toshiba Corp.),<br>26 October 1990 (26.10.1990),<br>page 4, line 6 to page 8, line 2<br>(Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008042824 A
- JP 10150698 A
- JP 2009171465 A